# EUROPEAN PATENT SPECIFICATION

(11) **EP 2 101 388 B1**
(45) Date of publication and mention of the grant of the patent: **05.06.2013**
(21) Application number: 08152613.9
(22) Date of filing: 11.03.2008
(51) Int. Cl.: H02J 7/00

(54) **Charge balancing circuit for ultracapacitors and lithium batteries**
Ladungsausgleichsschaltung für Ultrakondensatoren und Lithiumbatterien
Circuit d'équilibrage de charge pour supercondensateurs et batteries au lithium

(43) Date of publication of application: 16.09.2009
(73) Proprietor: Vlaamse Instelling voor Technologisch Onderzoek (VITO), 2400 Mol (BE)
(72) Inventor: Fransen, Gert, B-2490, BALEN (BE); Weyen, Dominique, B-3920, LOMMEL (BE); Verhaeven, Erik, B-2460, KASTERLEE (BE)
(74) Representative: Pronovem

(56) References cited:
- WO-A-2007/086971
- US-A- 5 982 142
- US-B1- 6 329 795
- US-B1- 6 806 686

## Description

### Field of the Invention

The present invention is related to rechargeable energy storage devices. Particularly, the invention is related to charge balancing electronic circuits for said energy storage devices. The balancing circuits provide means for balancing charge (voltage) differences between elements in a rechargeable energy storage system. The invention is particularly related to a balancing circuit and to a method of balancing for a series connection of electrochemical cells, more particularly ultracapacitors or lithium cells.

### State of the Art

Charge balancing circuits for two or more double layer capacitors (also referred to as super capacitors or ultracapacitors) are known from patent application US 2004/263121 and from patent US 6 806 686. The documents disclose a charge balancing circuit for providing charge balancing for a bank of series connected capacitors, the circuit comprising a voltage divider, an amplifier and a negative feedback resistor. A charge balancing circuit is connected between every two capacitors. The voltage in each of the capacitors is monitored and if the voltage in either one of the capacitors is higher than the other, the circuit transfers energy from the higher charged capacitor to the lower charged capacitor until the capacitors are balanced. A current limiting resistor can be included for limiting the output current of the amplifier to a safe value and for providing feedback information regarding the health of the capacitor.

A drawback of the above balancing circuit is that for large series connections of ultracapacitors, the circuit is unable to completely balance the charges of the different capacitors. In such large series, a certain charge instability is observed causing the charge in the different capacitors to oscillate.

Patent document US 5982142 discloses a battery equalizer including an error signal feedback circuit for controlling transistor switches and protective feedback signals, which are integrated to eliminate the effect of alternating voltages. Referring to Fig. 12 of that document, the voltage of the first battery in a series of two batteries is fed back, through an integrator circuit comprising a resistor and capacitor, to a differential amplifier. The capacitor is connected to the floating ground so that the fed back signal is integrated with respect to the floating ground and only the DC component of the battery voltage is applied to the differential amplifier. A voltage divider formed by equal resistors provides a voltage equal to half of the total voltage over the two batteries, which is applied through an integrating capacitor also connected to the floating ground, to the differential amplifier, so that the output of the differential amplifier represents an error signal with the AC component eliminated.

### Aims of the Invention

The present invention aims to provide a charge balancing device which does obviate the drawbacks of balancing devices of the prior art.

It is an aim of the invention to provide a charge balancing device which is able to balance the charge (voltage) across rechargeable energy storage devices connected in series. It is an aim of the invention to provide a charge balancing device which can be used for an improved balancing of even large series connections of said energy storage devices.

The present invention also aims to provide a method of charge balancing a series connection of rechargeable energy storage devices which obviates the drawbacks of methods of the prior art.

### Summary of the Invention

Aims of the invention are met by providing a device and a method for charge balancing as set out in the appended claims.

According to a first aspect of the invention, there is provided a device for balancing the charge of a first rechargeable energy storage device and a second rechargeable energy storage device, the first and the second rechargeable energy storage devices connected in series. The device for balancing comprises:
- a voltage divider for dividing the total voltage across the first energy storage device and the second energy storage device, the voltage divider comprising an output arranged for outputting half of said total voltage,
- a feedback connection providing a voltage feedback of the voltage across the first energy storage device, and
- a circuit comprising a first input coupled to the output of the voltage divider, a second input coupled to the voltage feedback and an output coupled to a discharging means for at least in part reducing a charge unbalance between the first energy storage device and the second energy storage device.
The circuit is arranged for outputting at its output a signal, which can be a function of the difference between the first input and the second input. Said signal hence depends on the difference between the first input and the second input.

A characteristic feature of the invention is that the device for balancing further comprises a low-pass filter for limiting the bandwidth of (the output of) said circuit. Preferably, the low-pass filter is arranged to limit the bandwidth of at least one input of the circuit. Said at least one input is preferably an inverting input.

The low-pass filter refers to an electrical filter comprising at least one finite upper cut-off frequency. The low-pass filter is preferably arranged to have a -3 dB upper cut-off frequency not higher than 50 Hz, more preferably not higher than 25 Hz, even more preferably not higher than 15 Hz.

Preferably, the low-pass filter comprises a resistor and a capacitor. Preferably, the resistor is coupled to the feedback connection. More preferably, the feedback connection comprises the resistor. The capacitor is preferably coupled to the feedback connection, advantageously between said second input and the output of said circuit. The second input of the circuit is preferably an inverting input.

Preferably, the discharging means comprises a first switch arranged across the first energy storage device and a second switch arranged across the second energy storage device. The first switch and the second switch are triggered by the output of the circuit. The first switch and the second switch are advantageously transistors. More preferably, the first switch and the second switch are arranged such that at most one of said first switch and said second switch are closed at any instant of time (during operation). Hence, the first switch and the second switch are not arranged to be closed at a same instant of time.

Preferably, the discharging means comprises a dissipator arranged to dissipate at least a part of the charge unbalance between the first and the second energy storage devices. The dissipator can act as a current limiter.

According to another aspect of the invention, there is provided a device comprising a series connection of rechargeable energy storage devices, and further comprising at least one device for balancing of the invention. Each one of said at least one device for balancing is coupled to a pair of consecutive rechargeable energy storage devices of said series connection. Preferably, for each pair of consecutive rechargeable energy storage devices of said series connection, a device for balancing according to the invention is provided. Said device preferably comprises a series connection of at least 20, more preferably at least 25, even more preferably at least 100, particularly preferably at least 150 and most preferably at least 250 rechargeable energy storage devices.

Preferably, in devices of the invention, the rechargeable energy storage devices are ultracapacitors.

Preferably, in devices of the invention, the rechargeable energy storage devices are lithium batteries.

According to still another aspect of the invention, there is provided a method of balancing the charge of a series connection of a first rechargeable energy storage device and a second rechargeable energy storage device. The method comprises the steps of:
- taking half of the total voltage across the first energy storage device and the second energy storage device,
- making the difference between said half of the total voltage and the voltage across the first energy storage device,
- outputting a signal in function of said difference, wherein the signal activates a discharging means for withdrawing energy from the first energy storage device or the second energy storage device so as to at least partially reduce a charge unbalance between the first energy storage device and the second energy storage device.
The discharging means is preferably arranged for withdrawing energy from the energy storage device having higher charge. According to the invention, the method further comprises the step of applying a low-pass filter prior to the step of making the difference.

Preferably, in the step of applying a low-pass filter, an upper limit is put to the bandwidth of the difference between said half of the total voltage and the voltage across the first energy storage device. Preferably, the step of applying a low-pass filter comprises applying the voltage across the first energy storage device to a low-pass filter prior to making said difference. Preferably, the step of making the difference comprises inverting the voltage across the first energy storage device.

The low-pass filter preferably has a -3 dB upper cut-off frequency of not higher than 50 Hz. The upper cut-off frequency is more preferably not higher than 25 Hz, even more preferably not higher than 15 Hz.

### Brief Description of the Drawings

Figure 1 represents a scheme of a charge balancing device according to the invention.

Figure 2 represents a preferred embodiment of a charge balancing device according to the invention.

### Detailed Description of the Invention

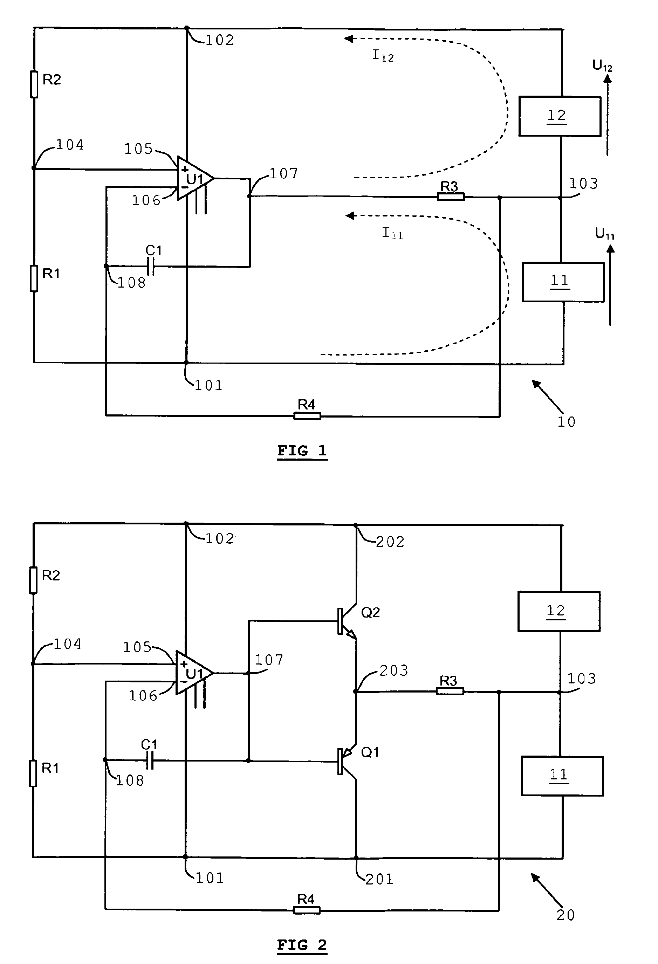

In accordance with an aspect of the invention, figure 1 represents an embodiment of a device 10 for balancing the charge of a first energy storage device 11 and a second energy storage device 12. The energy storage devices 11 and 12 are rechargeable. Each one energy storage device 11 and 12 can comprise a series connection of multiple energy storage elements (cells). Each one of the energy storage devices 11 and 12 can comprise a parallel connection of multiple energy storage cells.

The energy storage devices 11 and 12 can refer to ultracapacitor cells, which are also referred to as (electrochemical) double layer capacitor or supercapacitor cells. In contrast to conventional capacitors, such as electrostatic and electrolytic capacitors, ultracapacitors comprise two electrically conductive layers interposed between two conductive surfaces. The two electrically conductive layers are typically separated by a separator. Ultracapacitors can achieve very high capacitances in practical dimensions, and have a variety of industrial applications. Preferred applications are in fields of energy smoothing and momentary load devices, which require very high instant powers compared to the average power ratings.

The energy storage devices 11 and 12 can refer to lithium batteries as well. Other kinds of rechargeable energy storage devices can equally be used.

The energy storage devices 11 and 12 are connected in series. In the following embodiments, the energy storage devices 11 and 12 are referred to as energy storage cells. The latter cells can however refer to any type of rechargeable energy storage device. However, devices and methods of the invention are advantageously used with ultracapacitors or lithium batteries.

In order to remove or avoid unbalances in the charge of or voltage across the energy storage cells 11 and 12, the present invention provides for a device 10 for charge or voltage balancing. Charge balancing can be provided during recharging and/or during discharging. The charge balancing device 10 is arranged to be coupled to the series connection of cells 11 and 12. In the series connection as depicted in figure 1, the positive terminal of energy storage cell 11 is coupled at terminal 103 to the negative terminal of energy storage cell 12.

Charge balancing device 10 comprises a voltage divider coupled (connected) between the negative terminal 101 of cell 11 and the positive terminal 102 of cell 12. The voltage divider comprises an output terminal 104 which is arranged to output half of the total voltage (U₁₁ + U₁₂) across the terminals 101 and 102. The voltage U₁₁ refers to the voltage across cell 11 and the voltage U₁₂ refers to the voltage across cell 12.

The voltage divider can be formed of a series connection of two resistors R1 and R2 having equal rating (resistance). The tolerance on the resistance coefficient of R1 and R2 is preferably not larger than 1%, wherein tolerances not larger than 0.5% are more preferred and tolerances not larger than 0.1% are most preferred. Hence half of the total voltage across the cells 11 and 12 (subjected to the accuracy of the voltage divider) is made available at output terminal 104.

The balancing device 10 comprises a feedback connection, providing voltage feedback from terminal 103. The voltage feedback and the output of the voltage divider are compared in circuit U1.

Circuit U1 comprises a first input 105 coupled (connected) to the output terminal 104 of the voltage divider and a second input 106 coupled (connected) to the voltage feedback from terminal 103. The circuit U1 can be arranged to make the difference Δ between the voltage at the first input 105 and the voltage at the second input 106. The voltage at the first input 105 is arranged to be half of (U₁₁ + U₁₂). The voltage at the second input 106 is arranged to be the voltage U₁₁ across the first cell (voltage at terminal 103). The difference Δ can be positive, negative or zero. The circuit U1 is preferably arranged to invert the second input 106.

Furthermore, the circuit U1 can be coupled to a voltage supply. The voltage supply is preferably the voltage (U₁₁ + U₁₂) across the two cells 11 and 12. Thus, the circuit U1 can be coupled to the negative terminal 101 of cell 11 and to the positive terminal 102 of cell 12. An external power supply is hence advantageously not needed.

The circuit U1 is arranged to output a signal at an output terminal 107. The signal can be a function of the difference Δ. The signal can be a current and/or a voltage. In case a current signal is output by the circuit U1 at output terminal 107, that current can be positive (the circuit U1 is sourcing current), negative (the circuit U1 is sinking current), or zero. Hence, the circuit can be arranged to sink or source current at output terminal 107. A zero current can be output when the difference Δ = 0. In case a voltage signal is output by the circuit U1 at output terminal 107, that voltage is advantageously the upper or lower voltage of the voltage supply. By way of example, when the difference Δ is positive, the voltage at output terminal 107 can be equal to the voltage at positive terminal 102 of cell 12 and when the difference Δ is negative, the voltage at output terminal 107 can be equal to the voltage at negative terminal 101 of cell 11.

Terminal 107 is coupled to a discharging means (e.g. an electrical circuit) for withdrawing energy (i.e. discharging) from either the first cell, or the second cell and as such counteract a charge unbalance. The discharging means is arranged to withdraw energy from the first cell in case the voltage U₁₁ across the first cell is higher than half of the total voltage (U₁₁ + U₁₂). The discharging means is arranged to withdraw energy from the second cell 12 in case the voltage U₁₂ across the second cell is larger than half of the total voltage (U₁₁ + U₁₂).

The discharging means preferably comprises a dissipator for dissipating energy that can be withdrawn. The dissipator preferably comprises (or consists of) a resistor R3. The discharging means can also be arranged to transfer at least part of the energy that is arranged to be withdrawn to the other one of the two cells.

According to a particular embodiment of the balancing device, as represented in figure 1, a coupling (connection) is provided between the output terminal 107 of the circuit U1 and the terminal 103 between the first cell 11 and the second cell 12. The circuit U1 in this embodiment is furthermore arranged to output a current (I₁₁ or I₁₂). That current can hence be directly used for withdrawing energy.

Preferably, in the present embodiment, the resistor R3 is provided between terminals 103 and 107. Resistor R3 can be arranged to limit the current flowing through terminal 107.

The circuit U1 preferably comprises (or consists of) an operational amplifier. The operational amplifier comprises a non-inverting input, which is preferably the first input 105, and an inverting input, which is preferably the second input 106. The operational amplifier U1 is preferably coupled to terminals 101 and 102, which respectively provide negative and positive terminals of a voltage supply. The circuit U1 can comprise a comparator.

In order to reduce or suppress the charge instability observed with charge balancing devices of the prior art, the balancing device 10 comprises a resistor-capacitor circuit R4-C1. Circuit R4-C1 is so coupled as to act as a low-pass filter. The low-pass filter is preferably arranged in (or coupled to) the feedback connection (voltage feedback) to the circuit U1. The low-pass filter is preferably arranged to prevent the circuit U1 from operating (switching) at too high frequencies. The resistor-capacitor circuit R4-C1 can hence be arranged to reduce the bandwidth of the (signal of the) difference Δ . As a result of the resistor-capacitor circuit, a fast voltage change at terminal 103 is filtered, or "smoothed" before being fed back to the circuit U1. This can allow for blocking or slowing down the charge balancing operation when transients or fast changes in the charge of, or voltage across the cells 11 and 12 occur. Such transients can originate from fast switching of the circuit U1 itself.

In the embodiment as represented in figure 1, the capacitor C1 is coupled between the voltage feedback (at terminal 108) and the output terminal 107 of the circuit U1. The voltage feedback connection comprises the resistor R4, coupled between terminal 103 and terminal 108.

The resistor-capacitor circuit R4-C1 is preferably arranged to act as a first order low-pass filter. Higher-order low-pass filters can be implemented as well, such as by a cascade arrangement of resistor-capacitor circuits.

The value of the capacitor C1 and of the resistor R4 are determined in function of the cut-off frequency of the low-pass filter. The (upper) cut-off frequency of the low-pass filter (resistor-capacitor circuit R4-C1) at -3 dB is preferably not higher than 50 Hz, more preferably not higher than 25 Hz, most preferably not higher than 15 Hz.

Figure 2 represents a preferred embodiment of a balancing device of the invention. Referring to figure 2, balancing device 20 comprises substantially the same features of balancing device 10 as depicted in figure 1, except for the discharging means. The discharging means of balancing device 20 comprises a first switch Q1 and a second switch Q2. The first switch Q1 is coupled between a negative terminal 201 and a positive terminal 203 of the first cell 11. The second switch Q2 is coupled between a negative terminal 203 and a positive terminal 202 of the second cell 12. Terminals 201 and 101 can coincide, as well as terminals 202 and 102. Terminals 103 and 203 can coincide as well. Preferably, the discharging means of balancing device 20 comprises a dissipator, such as a resistor R3. The dissipator is preferably coupled between terminals 203 and 103.

The first switch Q1 and the second switch Q2 are both coupled to the output terminal 107 of the circuit U1. That coupling is so arranged as to drive the first switch and the second switch (i.e. for opening or closing said switches) in function of the signal (a voltage and/or a current) at terminal 107. The advantage over the scheme as in figure 1 is a decoupling between the signal output by the circuit U1 and the current used for (dis)charging either one of the two cells 11 and 12. In the embodiment of figure 2, a current flowing between output terminal 107 and either one of the switches Q1 and Q2 can merely be a signal current for activating (opening or closing) the first and/or the second switch (e.g. on the order of a few mA). As a result, the current running through the loops comprising either switch Q1 and Q2 is not limited anymore by the maximal current that the circuit U1 (e.g. operational amplifier) can source or sink.

Preferably, at most one of the first switch Q1 and the second switch Q2 is closed at any time (during operation). Hence, the first switch Q1 and the second switch Q2 can preferably not be in a closed (conducting) state simultaneously. As a result, energy will be withdrawn from the corresponding cell (coupled across the closed switch). That energy can be dissipated in resistor R3.

The first switch Q1 and the second switch Q2 are preferably transistors. The transistors are preferably so coupled as not to conduct simultaneously. At most one transistor preferably conducts at any time.

A balancing device of the invention is preferably used during charge operation. It can be used during discharge (use) operation. A balancing device of the invention can be used both during charge and discharge operation. A balancing device of the invention preferably does not need an external power supply.

According to a second aspect of the invention, a device, referred to as a battery pack (a cell pack), is provided. The battery pack comprises a series connection of rechargeable energy storage devices and one or more balancing devices according to the invention. Preferably, to every series of two energy storage devices a balancing device is coupled. The energy storage devices are preferably ultracapacitors, or can be lithium cells (batteries). Other kinds of rechargeable energy storage devices can be used as well. Such battery packs can be used in a variety of industrial applications, including but not limited to: lifting mechanisms, cranes, automotive and ships (anchor motors).

Beneficial effects of the balancing device of the invention can be significant for battery packs comprising a series of at least 20 rechargeable energy storage devices. More advantageous effects can be obtained with battery packs comprising a series of at least 25 rechargeable energy storage devices and even more advantageous effects with a series of at least 100 rechargeable energy storage devices. Battery packs comprising charge balancing devices of the invention and comprising a series of at least 150 and preferably a series of at least 250 can result in being particularly advantageous.

Another aspect of the invention relates to a method of balancing the charge of (or the voltage across) two rechargeable energy storage devices: first device 11 and second device 12, which are connected in series. A first step of the method refers to taking half of the total (instantaneous) voltage (U₁₁ + U₁₂) across the two energy storage devices.

In a second step, the difference Δ is made between that half of the total voltage (U₁₁ + U₁₂) and a voltage feedback, being the voltage U₁₁ across the first energy storage device 11. Preferably, the voltage feedback is subtracted from said half of the total voltage.

Based on the difference Δ, a signal is output in a third step. The signal can be a current and/or a voltage. The second step and the third step can be performed by a circuit U1, such as an operational amplifier.

The signal output in the third step, is arranged to trigger (or to drive) a discharging means, arranged to withdraw energy from either the first device 11, or the second device 12, so as to at least partially reduce a charge unbalance.

Referring to the scheme of figure 1, in case the voltage U₁₁ across the first device is higher than half of the total voltage (U₁₁ + U₁₂), the circuit U1 can be arranged to sink a current I₁₁, causing energy to be withdrawn from the first energy storage device 11. The circuit can be arranged to source a current I₁₂ in case the voltage U₁₂ across the second device is larger than half of the total voltage, causing energy to be withdrawn from the second device 12. A step of dissipating the withdrawn energy in a dissipator, such as resistor R3 can be included. Alternatively, or in addition to the latter step, a step of transferring the withdrawn energy to the other one of the two energy storage devices can be included.

Methods of charge balancing according to the invention comprise the step of limiting (cutting-off) the bandwidth of the (signal of the) difference Δ. Limiting the bandwidth is advantageously performed by applying a low-pass filter to either one of the inputs arranged for calculating said difference Δ. The low-pass filter is preferably applied to an input that is inverted. Preferably, limiting the bandwidth includes applying a low-pass filter to the voltage feedback signal. The bandwidth (of difference Δ and/or of the voltage feedback signal) is preferably so limited, that its upper cut-off frequency at -3 dB is not higher than 50 Hz, more preferably not higher than 25 Hz, most preferably not higher than 15 Hz. Limiting the bandwidth is advantageous for filtering out fast changes in the voltage across one or both energy storage devices 11 and 12, such as for example transients. As a result of the filtering step, charge instabilities and oscillatory behaviour of the charge in a series of energy storage devices can be at least in part suppressed.

### Description of a Preferred Embodiment of the Invention

Embodiments of a charge balancing device 10 of the invention can be used for ultracapacitor cells 11 and 12. The ultracapacitor cells can each have a nominal voltage rating of e.g. 2.7 V. In that case, in the charge balancing device 10 according to figure 1, the resistors R1 and R2 of the voltage divider can have a resistance of 100 kΩ. The resistor-capacitor circuit can be arranged to have an upper cut-off frequency of 10 Hz (at -3 dB). Therefore, the resistance of R4 can be selected to be 100 kΩ and the capacitance of C1 can be selected to be 1 µF. The resistance of R3 can be so selected as to limit the current output from the circuit U1 to 20 mA. That current allows for implementing the circuit U1 by an operational amplifier.

In case a higher current is desired for balancing the series of cells 11 and 12, a scheme according to figure 2 can be used. The switches Q1 and Q2 are preferably transistors, such as an pnp transistor for Q1 and a npn transistor for Q2. The scheme of figure 2 allows to provide currents as high as 1 A through resistor R3.

## Claims

1. A device (10) for balancing the charge of a first rechargeable energy storage device (11) and a second rechargeable energy storage device (12), the first rechargeable energy storage device and the second rechargeable energy storage device connected in series, wherein the device for balancing comprises:
- a voltage divider (R1, R2) for dividing the total voltage across the first energy storage device and the second energy storage device and comprising an output (104) arranged for outputting half of said total voltage,
- a feedback connection (103-108) providing voltage feedback of the voltage across the first energy storage device, and
- a circuit (U1) comprising a first input (105) coupled to the output of the voltage divider, a second input (106) coupled to the voltage feedback and an output (107) arranged for outputting a signal in function of the difference between the first input and the second input, wherein the output of said circuit is coupled to a discharging means for at least in part reducing a charge unbalance between the first energy storage device and the second energy storage device,
wherein the device for balancing comprises a low-pass filter (C1, R4) for limiting the bandwidth of said circuit, comprising a resistor (R4) coupled to the feedback connection and a capacitor (C1), **characterised in that** the capacitor (C1) is coupled between said second input (106) and the output of said circuit (107).

2. The device according to claim 1, wherein the low-pass filter is arranged to have a -3 dB upper cut-off frequency not higher than 50 Hz.

3. The device according to claim 1 or 2, wherein the discharging means comprises a first switch (Q1) arranged across the first energy storage device and a second switch (Q2) arranged across the second energy storage device, wherein the first switch and the second switch are arranged to be triggered by the output of the circuit (U1).

4. The device according to claim 3, wherein the first switch and the second switch are transistors.

5. The device according to any one of the preceding claims, wherein the discharging means comprises a dissipator (R3) arranged to dissipate at least a part of the charge unbalance between the first and the second energy storage devices.

6. A device comprising a series connection of rechargeable energy storage devices, and further comprising at least one device for balancing according to any one of claims 1 to 5, wherein each one of said at least one device for balancing is coupled to a pair of consecutive rechargeable energy storage devices of said series connection.

7. The device according to any one of the claims 1 to 6, wherein the rechargeable energy storage devices are ultracapacitors.

8. The device according to any one of the claims 1 to 6, wherein the rechargeable energy storage devices are lithium batteries.

9. A method of balancing the charge of a series connection of a first rechargeable energy storage device (11) and a second rechargeable energy storage device (12), the method comprising the steps of:
- taking half of the total voltage across the first energy storage device and the second energy storage device,
- making the difference between said half of the total voltage and the voltage across the first energy storage device,
- outputting a signal in function of said difference, wherein the signal activates a discharging means for withdrawing energy from the first energy storage device or the second energy storage device as to at least partially reduce a charge unbalance between the first energy storage device and the second energy storage device,
wherein, prior to the step of making the difference, the method comprises the step of applying a low-pass filter comprising a resistor (R4) and a capacitor (C1) between the voltage across the first energy storage device and the signal function of said difference.

10. The method according to claim 9, wherein the low-pass filter has a -3 dB upper cut-off frequency of not higher than 50 Hz.

## Patentansprüche

1. Eine Vorrichtung (10) zum Ausgleichen der Ladung einer ersten wiederaufladbaren Energiespeichervorrichtung (11) und einer zweiten wiederaufladbaren Energiespeichervorrichtung (12), wobei die erste wiederaufladbare Energiespeichervorrichtung und die zweite wiederaufladbare Energiespeichervorrichtung in Reihe geschaltet sind, wobei die Vorrichtung zum Ausgleichen Folgendes umfasst:
- einen Spannungsteiler (R1, R2) zum Aufteilen der Gesamtspannung über die erste Energiespeichervorrichtung und die zweite Energiespeichervorrichtung hinweg, welcher einen Ausgang (104) umfasst, der zum Ausgeben der Hälfte der besagte Gesamtspannung geeignet ist,
- einen Rückführungsanschluss (103-108), welcher Spannungsrückführung der Spannung über die erste Energiespeichervorrichtung hinweg bereitstellt, und
- einen Schaltkreis (U1), welcher einen ersten Eingang (105), der an den Ausgang des Spannungsteilers gekoppelt ist, einen zweiten Eingang (106), der an die Spannungsrückführung gekoppelt ist, und einen Ausgang (107), der zum Ausgeben eines Signals in Abhängigkeit von der Differenz zwischen dem ersten Eingang und dem zweiten Eingang geeignet ist, umfasst, wobei der Ausgang des besagten Schaltkreises an ein Entladungsmittel gekoppelt ist, um zumindest teilweise ein Ladungsungleichgewicht zwischen der ersten Energiespeichervorrichtung und der zweiten Energiespeichervorrichtung zu verringern, wobei die Vorrichtung zum Ausgleichen einen Tiefpassfilter (C1, R4) zum Begrenzen der Bandbreite des besagten Schaltkreises umfasst, welcher einen Widerstand (R4), der an den Rückführungsanschluss gekoppelt ist, und einen Kondensator (C1) umfasst, **dadurch gekennzeichnet, dass** der Kondensator (C1) zwischen dem zweiten Eingang (106) und dem Ausgang des Schaltkreises (107) gekoppelt ist.

2. Die Vorrichtung nach Anspruch 1, wobei der Tiefpassfilter derart ausgeführt ist, dass er eine - 3 dB obere Grenzfrequenz mit nicht mehr als 50 Hz aufweist.

3. Die Vorrichtung nach Anspruch 1 oder 2, wobei das Entladungsmittel einen ersten Schalter (Q1), der über die erste Energiespeichervorrichtung hinweg angeordnet ist, und einen zweiten Schalter (Q2), der über die zweite Energiespeichervorrichtung hinweg angeordnet ist, umfasst, wobei der erste Schalter und der zweite Schalter derart ausgeführt sind, dass sie durch den Ausgang des Schaltkreises (U1) ausgelöst werden.

4. Die Vorrichtung nach Anspruch 3, wobei der erste Schalter und der zweite Schalter Transistoren sind.

5. Die Vorrichtung nach irgendeinem der vorhergehenden Ansprüche, wobei das Entladungsmittel einen Energieumwandler (R3) umfasst, der derart ausgeführt ist, dass er zumindest einen Teil des Ladungsungleichgewichts zwischen der ersten und zweiten Energiespeichervorrichtung abführt.

6. Eine Vorrichtung, welche eine Reihenschaltung wiederaufladbarer Energiespeichervorrichtungen umfasst, und welche ferner mindestens eine Vorrichtung zum Ausgleichen nach irgendeinem der Ansprüche 1 bis 5 umfasst, wobei jede der besagten mindestens einen Vorrichtungen zum Ausgleichen an ein Paar aufeinanderfolgende wiederaufladbare Energiespeichervorrichtungen der besagten Reihenschaltung gekoppelt ist.

7. Die Vorrichtung nach irgendeinem der Ansprüche 1 bis 6, wobei die wiederaufladbaren Energiespeichervorrichtungen Ultrakondensatoren sind.

8. Die Vorrichtung nach irgendeinem der Ansprüche 1 bis 6, wobei die wiederaufladbaren Energiespeichervorrichtungen Lithiumbatterien sind.

9. Ein Verfahren zum Ausgleichen der Ladung einer Reihenschaltung aus einer ersten wiederaufladbaren Energiespeichervorrichtung (11) und einer zweiten wiederaufladbaren Energiespeichervorrichtung (12), wobei das Verfahren folgende Schritte umfasst:
- Bestimmen der Hälfte der Gesamtspannung über die erste Energiespeichervorrichtung und die zweite Energiespeichervorrichtung hinweg,
- Ermitteln der Differenz zwischen der Hälfte der Gesamtspannung und der Spannung über die erste Energiespeichervorrichtung hinweg,
- Ausgeben eines Signals in Abhängigkeit von der besagten Differenz, wobei das Signal ein Entladungsmittel zum Entziehen von Energie aus der ersten Energiespeichervorrichtung oder der zweiten Energiespeichervorrichtung aktiviert, um zumindest teilweise ein Ladungsungleichgewicht zwischen der ersten Energiespeichervorrichtung und der zweiten Energiespeichervorrichtung zu verringern,
wobei das Verfahren, vor dem Schritt des Ermittelns der Differenz, den Schritt des Anwendens eines Tiefpassfilters umfasst, welcher einen Widerstand (R4) und einen Kondensator (C1) zwischen der Spannung über die erste Energiespeichervorrichtung hinweg und der Signal abhängig von der besagten Differenz umfasst.

10. Das Verfahren nach Anspruch 9, wobei der Tiefpassfilter eine -3 dB obere Grenzfrequenz mit nicht mehr als 50 Hz aufweist.

## Revendications

1. Dispositif (10) pour équilibrer la charge d'un premier dispositif de stockage d'énergie rechargeable (11) et d'un second dispositif de stockage d'énergie rechargeable (12), le premier dispositif de stockage d'énergie rechargeable et le second dispositif de stockage d'énergie rechargeable étant connectés en série, le dispositif d'équilibrage comprenant :
- un diviseur de tension (R1, R2) pour diviser la tension totale aux bornes du premier dispositif de stockage d'énergie et du second dispositif de stockage d'énergie et comprenant une sortie (104) conçue pour produire en sortie la moitié de ladite tension totale,
- une connexion de rétroaction (103-108) fournissant une rétroaction de tension de la tension aux bornes du premier dispositif de stockage d'énergie, et
- un circuit (U1) comprenant une première entrée (105) couplée à la sortie du diviseur de tension, une seconde entrée (106) couplée à la rétroaction de tension et une sortie (107) conçue pour produire en sortie un signal en fonction de la différence entre la première entrée et la seconde entrée, la sortie dudit circuit étant couplée à des moyens de décharge pour réduire au moins en partie un déséquilibre de charge entre le premier dispositif de stockage d'énergie et le second dispositif de stockage d'énergie,
dans lequel le dispositif d'équilibrage comprend un filtre passe-bas (C1, R4) pour limiter la largeur de bande dudit circuit, comprenant une résistance (R4) couplée à la connexion de rétroaction et un condensateur (C1), **caractérisé en ce que** le condensateur (C1) est couplé entre ladite seconde entrée (106) et la sortie dudit circuit (107).

2. Dispositif selon la revendication 1, dans lequel le filtre passe-bas est conçu pour avoir une fréquence de coupure supérieure à -3 dB ne dépassant pas 50 Hz.

3. Dispositif selon la revendication 1 ou 2, dans lequel les moyens de décharge comprennent un premier interrupteur (Q1) disposé aux bornes du premier dispositif de stockage d'énergie et un second interrupteur (Q2) disposé aux bornes du second dispositif de stockage d'énergie, le premier interrupteur et le second interrupteur étant conçus pour être déclenchés par la sortie du circuit (U1).

4. Dispositif selon la revendication 3, dans lequel le premier interrupteur et le second interrupteur sont des transistors.

5. Dispositif selon l'une quelconque des revendications précédentes, dans lequel les moyens de décharge comprennent un dissipateur (R3) conçu pour dissiper au moins une partie du déséquilibre de charge entre le premier et le second dispositifs de stockage d'énergie.

6. Dispositif comprenant une connexion en série de dispositifs de stockage d'énergie rechargeables et comprenant en outre au moins un dispositif d'équilibrage selon l'une quelconque des revendications 1 à 5, dans lequel chacun desdits au moins un dispositif d'équilibrage est couplé à une paire de dispositifs de stockage d'énergie rechargeables consécutifs de ladite connexion en série.

7. Dispositif selon l'une quelconque des revendications 1 à 6, dans lequel les dispositifs de stockage d'énergie rechargeables sont des condensateurs haute capacité.

8. Dispositif selon l'une quelconque des revendications 1 à 6, dans lequel les dispositifs de stockage d'énergie rechargeables sont des batteries au lithium.

9. Procédé d'équilibrage de la charge d'une connexion en série d'un premier dispositif de stockage d'énergie rechargeable (11) et d'un second dispositif de stockage d'énergie rechargeable (12), le procédé comprenant les étapes suivantes :
- le retrait de la moitié de la tension totale aux bornes du premier dispositif de stockage d'énergie et du second dispositif de stockage d'énergie,
- l'établissement de la différence entre ladite moitié de la tension totale et la tension aux bornes du premier dispositif de stockage d'énergie,
- la production en sortie d'un signal en fonction de ladite différence, le signal activant des moyens de décharge pour enlever de l'énergie au premier dispositif de stockage d'énergie ou au second dispositif de stockage d'énergie afin de réduire au moins en partie un déséquilibre de charge entre le premier dispositif de stockage d'énergie et le second dispositif de stockage d'énergie,
dans lequel, avant l'étape d'établissement de la différence, le procédé comprend l'étape d'application d'un filtre passe-bas comprenant une résistance (R4) et un condensateur (C1) entre la tension aux bornes du premier dispositif de stockage d'énergie et le signal fonction de ladite différence.

10. Procédé selon la revendication 9, dans lequel le filtre passe-bas a une fréquence de coupure supérieure à -3 dB ne dépassant pas 50 Hz.
